# EUROPEAN PATENT APPLICATION

(11) **EP 1 911 657 A2**
(43) Date of publication of application: **16.04.2008**
(21) Application number: 07118059.0
(22) Date of filing: 08.10.2007
(51) Int. Cl.: B62D 1/183, B62D 1/187

(54) **Steering column assembly for a vehicle**

(30) Priority: 12.10.2006 US 546611
(71) Applicant: Delphi Technologies, Inc., Troy, Michigan 48007 (US)
(72) Inventor: Ridgway, Jason R., Bay City, MI 48706 (US); Scrivener, Sam L., Durand, MI 48429 (US)
(74) Representative: Denton, Michael John

(57) **Abstract**

A steering column assembly (20) for a vehicle having a steering column (22) for providing tilting movement (26) and telescoping movement (28) is disclosed. A first locking device (42) is coupled to the steering column (22) and movable between a first locked position (44) and a first unlocked position (46) for preventing the telescoping movement (28) and for allowing the telescoping movement (28), respectively. The first locking device (42) further defines a predetermined mid-position between the first locked position (44) and the first unlocked position (46). A second locking device (66) is coupled to the steering column (22) and moveable between a second locked position and a second unlocked position (70) for preventing the tilting movement (26) and for allowing the tilting movement (26), respectively. A cable (96) extends between the first locking device (42) and the second locking device (66). A mechanism is coupled to the cable (96) for delaying release of the second locking device (66) from the steering column (22) until the first locking device (42) moves to the predetermined mid-position.

## Description

### TECHNICAL FIELD

The present invention relates to a steering column assembly for a vehicle, more specifically to a steering column having a lever for adjusting both tilting movement and telescoping movement.

### BACKGROUND OF THE INVENTION

Vehicles can be equipped with a steering column that adjusts the position of a steering wheel to enhance the comfort and safety of the driver. For example, the steering column can provide telescoping movement for moving the steering wheel closer to and away from the driver. Also, the steering wheel can provide tilting movement to tilt the steering wheel relative to other components of the steering column. These features cooperate to enable the driver to adjust the steering wheel to a desired, convenient position for operating the vehicle and for enabling the steering wheel to be moved out of the way to provide greater access to getting into and out of the driver's seat of the vehicle. Steering columns which are adjustable may include a lever coupled to a locking device for selectively allowing both the tilt movement and the telescoping movement of the steering column simultaneously and for preventing both the tilt movement and the telescoping movement simultaneously once the desired position of the steering wheel has been selected. However, the force required to move the lever to allow both the tilting movement and the telescoping movement is large due to the simultaneous disengagement of the locking devices.

Therefore, there remains a need to develop a steering column having a mechanism to adjust both tilting movement and telescoping movement which reduces the forces to move a lever.

### SUMMARY OF THE INVENTION

The present invention provides for a steering column assembly for a vehicle having a steering column. The steering column defines a longitudinal axis for providing tilting movement and telescoping movement relative to the longitudinal axis. A first locking device is coupled to the steering column and movable between a first locked position and a first unlocked position. The first locked position of the first locking device secures the steering column for preventing the telescoping movement. The first unlocked position of the first locking device releases from the steering column for allowing the telescoping movement. The first locking device also defines a predetermined mid-position between the first locked position and the first unlocked position. A second locking device is coupled to the steering column and moveable between a second locked position and a second unlocked position. The second locked position of the second locking device secures the steering column for preventing the tilting movement. The second unlocked position of the second locking device releases from the steering column for allowing the tilting movement. A cable extends between the first locking device and the second locking device and a mechanism is coupled to the cable for delaying release of the second locking device from the steering column until the first locking device moves to the predetermined mid-position.

The present invention therefore provides for a mechanism for delaying release of a second locking device from a steering column until a first locking device moves to a predetermined mid-position which reduces the force required to move the first locking device to a first unlocked position and the second locking device to a second unlocked position. The mechanism allows for a more uniform lever load when delaying release of the second locking device from the steering column until the first locking device moves to the predetermined mid-position.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a side view of a steering column assembly having a lever in a locking position;

Figure 2 is a side view of the steering column assembly having the lever in an adjusting position;

Figure 3 is a perspective view of an outer jacket with an inner jacket slidably disposed within the outer jacket for telescoping movement;

Figure 4 is a side view, partly in section, of a first locking device in a first locked position;

Figure 5 is a side view, partly in section, of the first locking device in a first unlocked position;

Figure 6 is a side view of the steering column assembly including an actuator having a motor and a gear box;

Figure 7 is a side view of the steering column assembly with part of the gear box removed;

Figure 8 is a side view of a second locking device in a second locked position;

Figure 9 is a side view of the second locking device in a predetermined mid-position;

Figure 10 is a side view of the second locking device in a second unlocked position; and

Figure 11 is a graphical representation of the reduction in force to rotate the lever as compared to the prior art.

### DESCRIPTION OF THE PREFERRED EMBODIMENTS

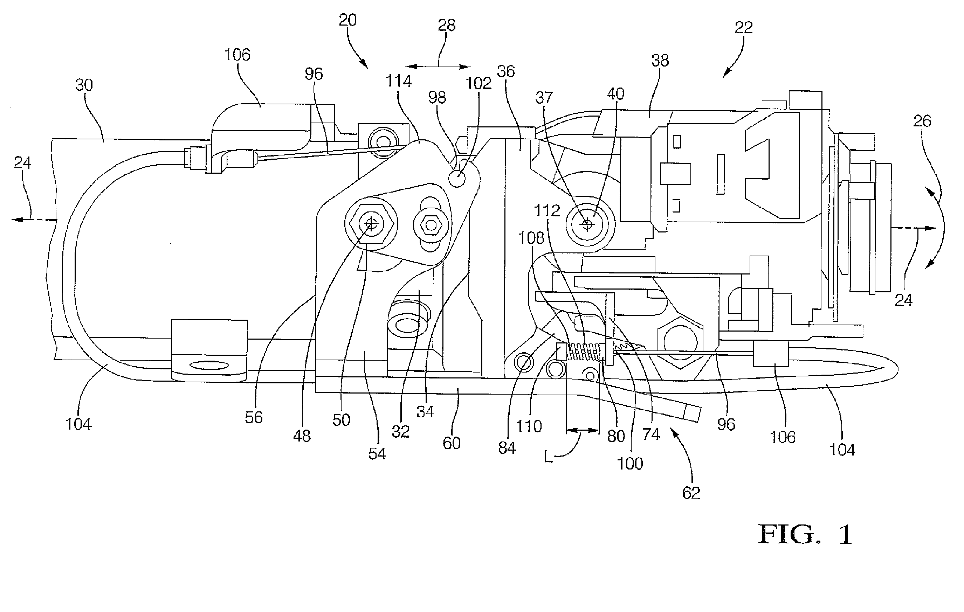

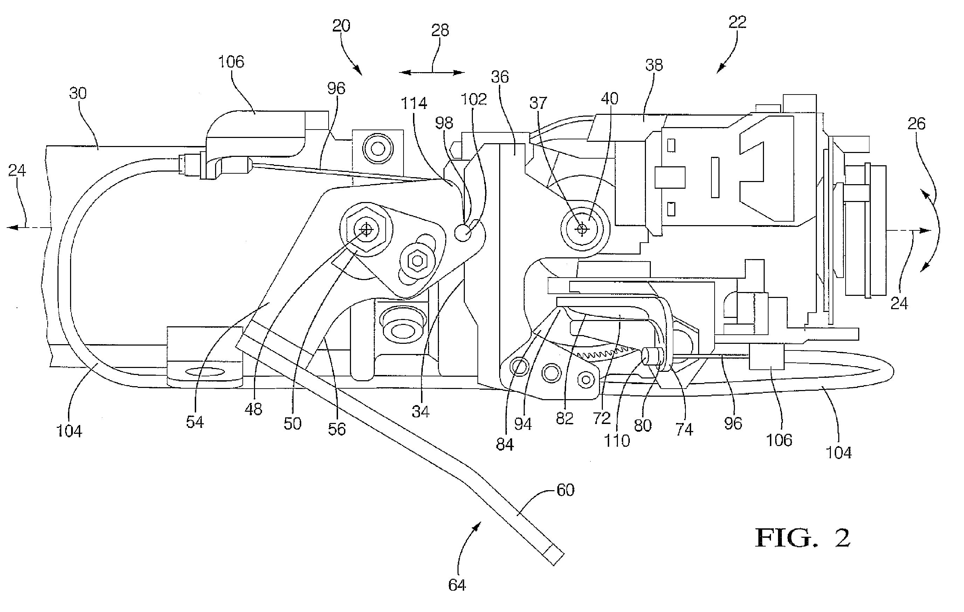

Referring to the Figures, wherein like numerals indicate like or corresponding parts throughout the several views, a steering column assembly 20 for a vehicle (not shown) is generally shown in Figures 1 and 2.

The steering column assembly 20 includes a steering column 22 defining a longitudinal axis 24 for providing tilting movement 26 and telescoping movement 28. The steering column 22 includes an outer jacket 30 and an inner jacket 32 slidably disposed in the outer jacket 30 along the longitudinal axis 24 for providing the telescoping movement 28. The inner jacket 32 includes an upper end 34 with a support member 36 defining a tilt axis 37 is disposed on the upper end 34. An upper steering shaft member 38 is coupled to the support member 36 for providing the tilting movement 26. A pin 40 is disposed along the tilt axis 37 for coupling the upper steering shaft member 38 to the support member 36. A steering wheel (not shown) is coupled to the upper steering shaft member 38 and the driver of the vehicle moves the steering wheel to adjust the steering wheel to the desired position.

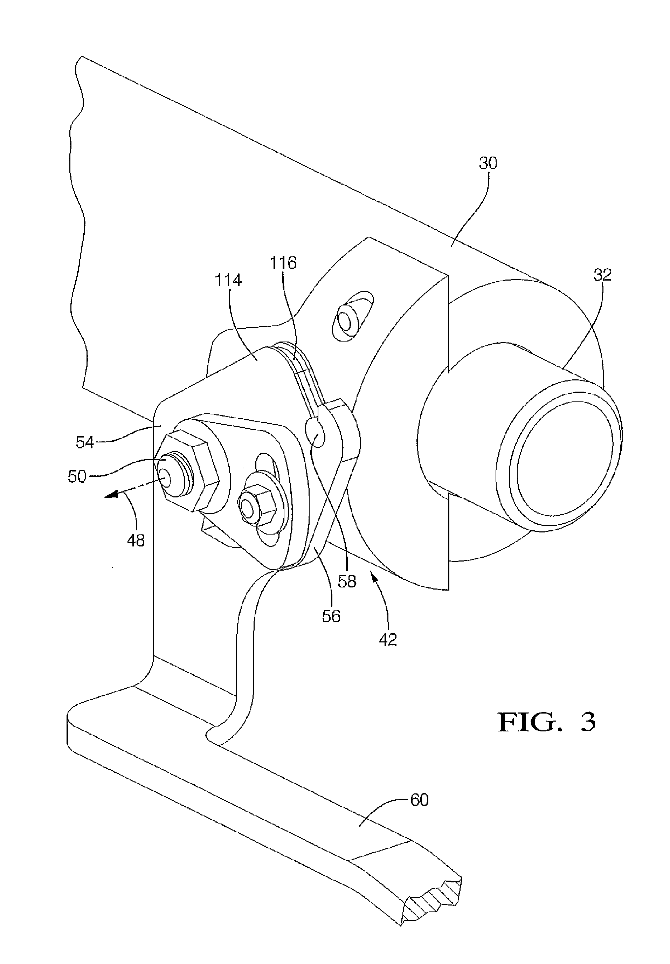

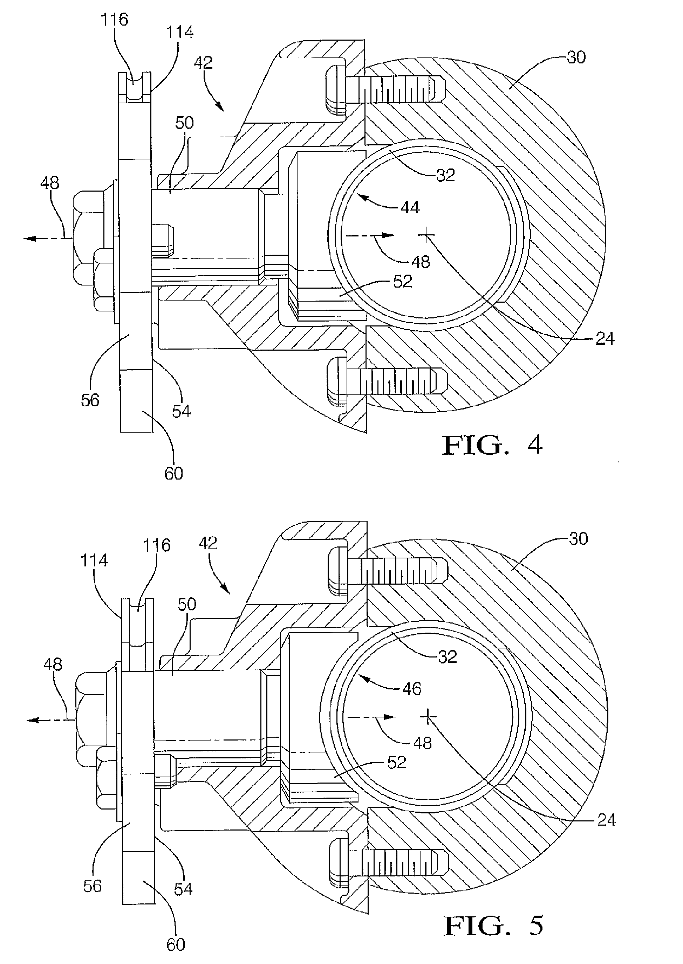

Referring also to Figures 3-5, a first locking device 42 is coupled to the steering column 22 and movable between a first locked position 44 securing the steering column 22 for preventing the telescoping movement 28 (Figures 1 and 4) and a first unlocked position 46 releasing from the steering column 22 for allowing the telescoping movement 28 (Figures 2 and 5). The first locking device 42 defines a predetermined mid-position between the first locked position 44 and the first unlocked position 46. The first locking device 42 further defines a pivot axis 48 and includes a bolt 50 disposed along the pivot axis 48 for moving the first locking device 42 between the positions 44, 46 of the first locking device 42. A wedge 52 is disposed on the bolt 50 and movable along the pivot axis 48 when the first locking device 42 moves between the positions 44, 46 of the first locking device 42. More specifically, when the first locking device 42 is in the first locked position 44, the wedge 52 engages the inner jacket 32 to prevent the telescoping movement 28. When the first locking device 42 is in the first unlocked position 46, the wedge 52 is spaced from the inner jacket 32 to allow the telescoping movement 28. Wedge devices are well known in the art and will not be discussed further. However it is to be appreciated that any kind of wedge may be used to prevent telescoping movement 28, such as a cam follower device or any other device known to those skilled in the art.

The first locking device 42 includes a plate 54 having a periphery 56 is coupled to the bolt 50. The periphery 56 is spaced from the pivot axis 48 and defines a cavity 58 spaced from the bolt 50. The first locking device further includes a lever 60 extends from the plate 54 and spaced from the cavity 58. More specifically, the lever 60 extends from the periphery 56 of the plate 54. The lever 60 and the plate 54 are rotatably movable about the pivot axis 48 between the positions 44, 46 of the first locking device 42. The lever 60 defines a locking position 62 and an adjusting position 64 such that when the lever 60 rotates about the pivot axis 48 from the locking position 62 to the adjusting position 64, the first locking device 42 moves from the first locked position 44 to the first unlocked position 46.

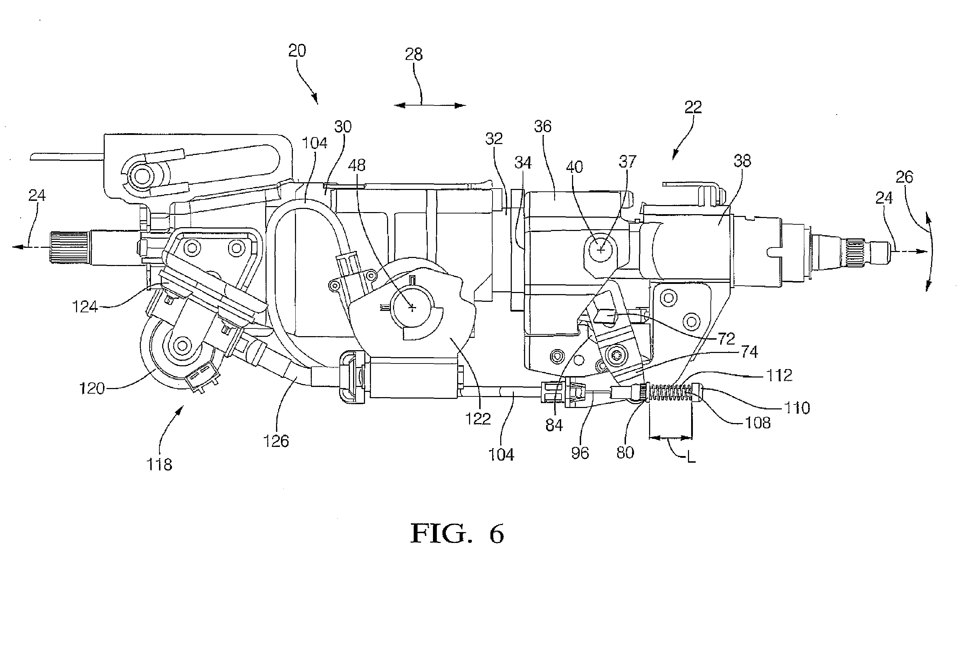

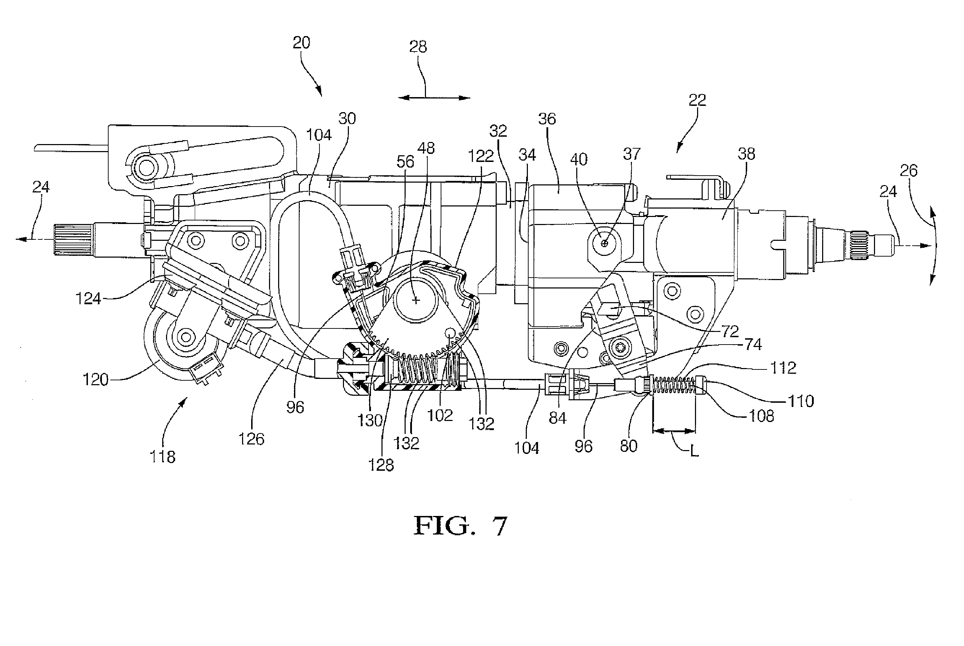

Alternatively, as shown in Figures 6 and 7, an actuator 118 replaces the lever 60. The actuator 118 is disposed on the steering column assembly 20 such that the lever 60 is eliminated. The actuator 118 is coupled to the plate 54 with the plate 54 rotatably movable about the pivot axis 48 between the positions 44, 46 of the first locking device 42. The actuator 118 is further defined as a motor 120 and a gear box 122 with the gear box 122 disposed on the bolt 50 and coupled to the motor 120. The motor 120 is coupled to the outer jacket 30. More specifically, a brace 124 is disposed on the outer jacket 30 and the motor 120 is disposed on the brace 124. However it is to be appreciated that the motor 120 may be disposed anywhere on the steering column assembly 20. The motor 120 may be an electric motor or any other acceptable type of motor known in the art. A drive cable 126 extends between the motor 120 and the gear box 122 for coupling the motor 120 to the gear box 122.

The gear box 122 includes a worm 128 and a worm gear 130 adjacent one another with the worm gear 130 disposed on the bolt 50. The worm 128 and the worm gear 130 are disposed in the gear box 122 with the plate 54 disposed on the worm gear 130. The worm gear 130 and the plate 54 may be separate pieces coupled together by welding, fasteners, adhesives or any other way known in the art to couple pieces together. However it is to be appreciated that the plate 54 and the worm gear 130 may be integrally formed of a homogeneous material. The worm 128 and the worm gear 130 each include a plurality of serrations 132 that cooperate with each other for rotating the plate 54 about the pivot axis 48 between the positions 44, 46 of the first locking device 42. More specifically, the drive cable 126 is coupled to the worm 128 such that when the motor 120 is actuated, the drive cable 126 rotates the worm 128 which moves the serrations 132 and rotates the worm gear 130 and the plate 54 about the pivot axis 48 between the positions 44, 46 of the first locking device 42.

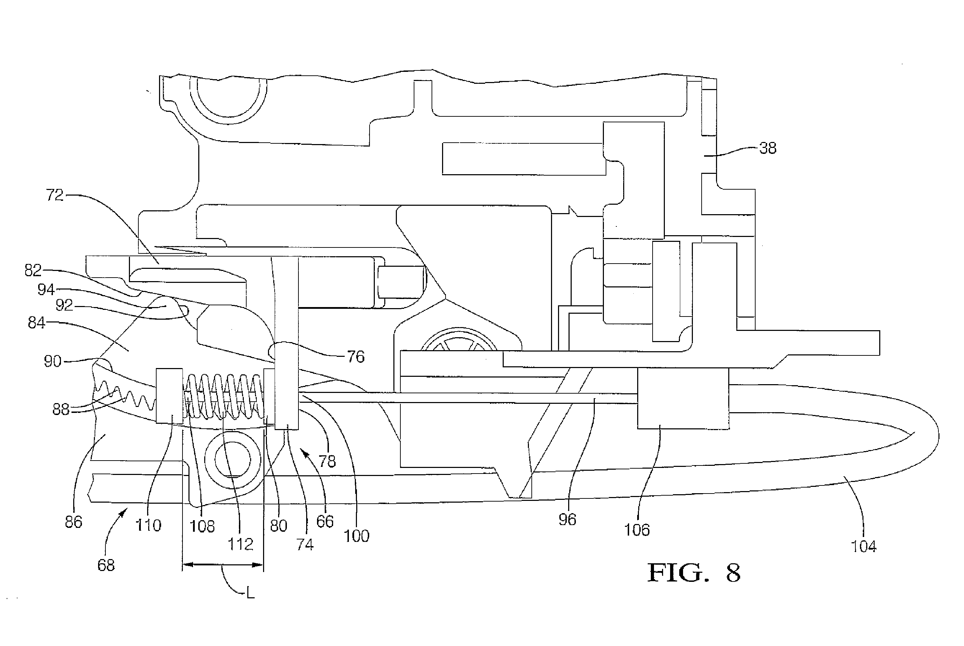

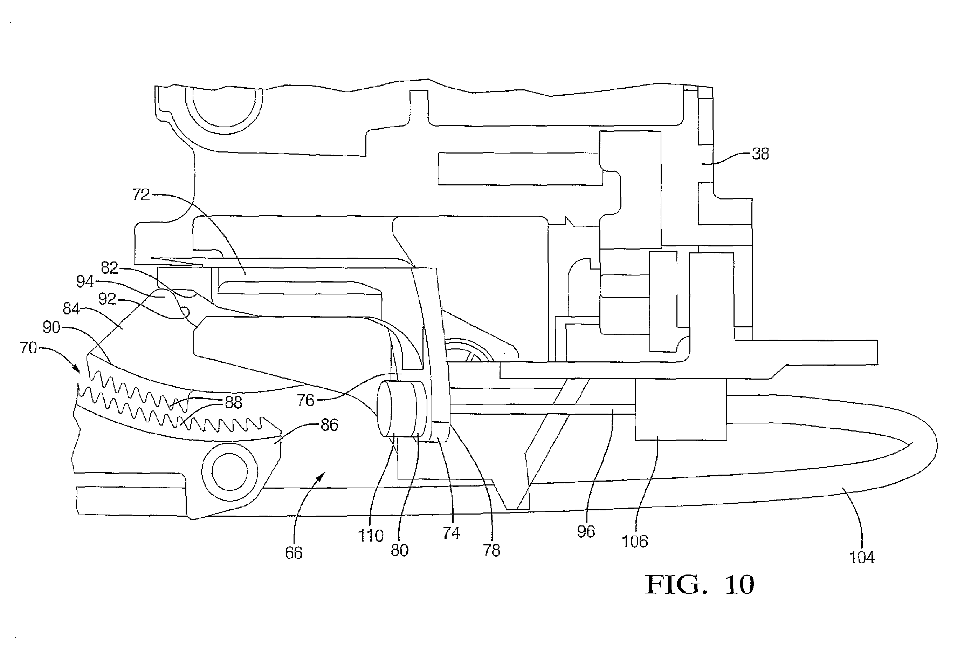

Referring to Figures 1, 2, and 8-10, a second locking device 66 is coupled to the steering column 22 and moveable between a second locked position 68 securing the steering column 22 for preventing the tilting movement 26 (Figures 1 and 8) and a second unlocked position 70 releasing from the steering column 22 for allowing the tilting movement 26 (Figures 2 and 10).

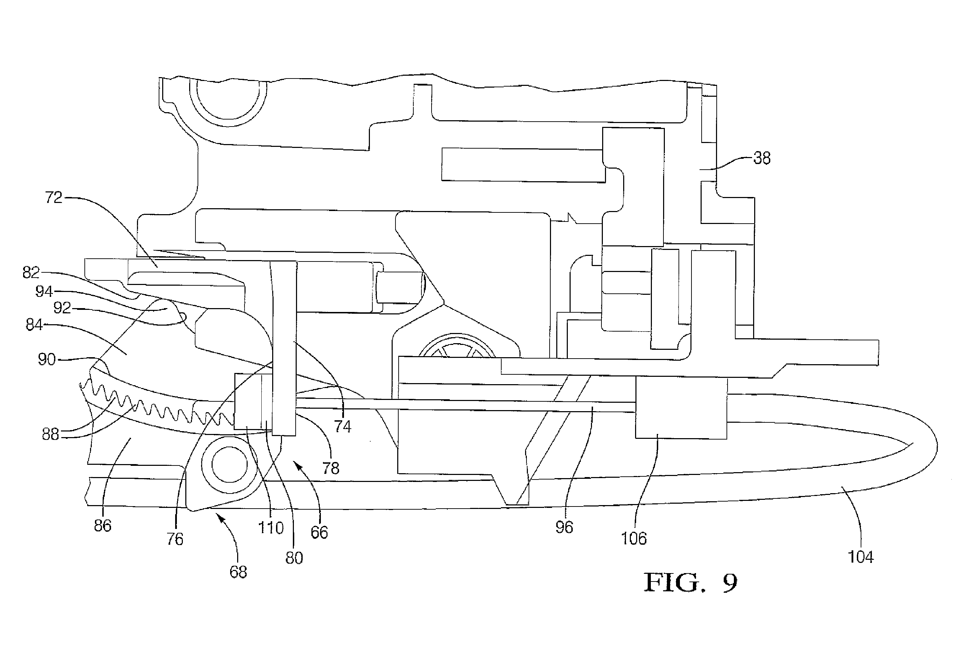

Figure 9 shows the second locking device 66 in the predetermined mid-position. The second locking device 66 includes a body portion 72 having an arm 74 extending away from the body portion 72. More specifically, the body portion 72 extends along the longitudinal axis 24 and the arm 74 extends radially away from the longitudinal axis 24. The arm 74 includes a front side 76 and a back side 78 spaced from each other and having a stop surface 80 disposed on the front side 76. The body portion 72 includes an angled surface 82 adjacent to the front side 76 of the arm 74. A return spring (not shown) may be coupled to the body portion 72 for continuously biasing the second locking device 66 in the second locked position.

A first shoe 84 and a second shoe 86 are disposed on the steering column 22 with each having cooperating teeth 88 for preventing the tilting movement 26 when the teeth 88 of the first and second shoe 86 are engaged. The first shoe 84 includes a first side 90 and a second side 92 opposing one another with the first side 90 having the teeth 88. The first shoe 84 is continuously biased toward the body portion 72 of the second locking device 66 by a spring (not shown). The second side 92 of the first shoe 84 includes a raised portion 94 for abutting the angled surface 82 of the body portion 72 such that when the body portion 72 moves, the raised portion 94 moves along the angled surface 82 to engage or disengage the teeth 88 of the first shoe 84 with the teeth 88 of the second shoe 86. More specifically, when the second locking device 66 moves to the second unlocked position 70, the body portion 72 moves along the longitudinal axis 24 and moves along the tilting axis 37 such that the raised portion 94 of the first shoe 84 moves along the angled surface 82 of the body portion 72 to disengage the teeth 88 of the first and second shoes 84, 86. However it is to be appreciated that the first shoe 84 and the second shoe 86 are well known in the art and will not be discussed further.

As shown in Figures 1 and 2, a cable 96 extends between the first locking device 42 and the second locking device 66. The cable 96 includes a first end 98 coupled to the first locking device 42 and a second end 100 coupled to the second locking device 66. However it is to be appreciated that the first end 98 of the cable 96 may be coupled to the periphery 56 of the plate 54 such that when the first locking device 42 moves, the first end 98 of the cable 96 moves without pulling the second end 100 of the cable 96. A protrusion 102 is disposed on the first end 98 of the cable 96. More specifically, the protrusion 102 is disposed in the cavity 58 of the plate 54 for securing the first end 98 of the cable 96 to the first locking device 42. A conduit 104 is disposed about the cable 96 for supporting the cable 96. The conduit 104 is spaced from the first end 98 and the second end 100 of the cable 96 with the cable 96 slidable in the conduit 104. At least one bracket 106 may be disposed on the steering column 22 for supporting the cable 96. One bracket 106 may be disposed on the outer jacket 30 and another bracket 106 may be disposed on the upper steering shaft member 38. However it is to be appreciated that the bracket 106 may be disposed anywhere on the steering column 22.

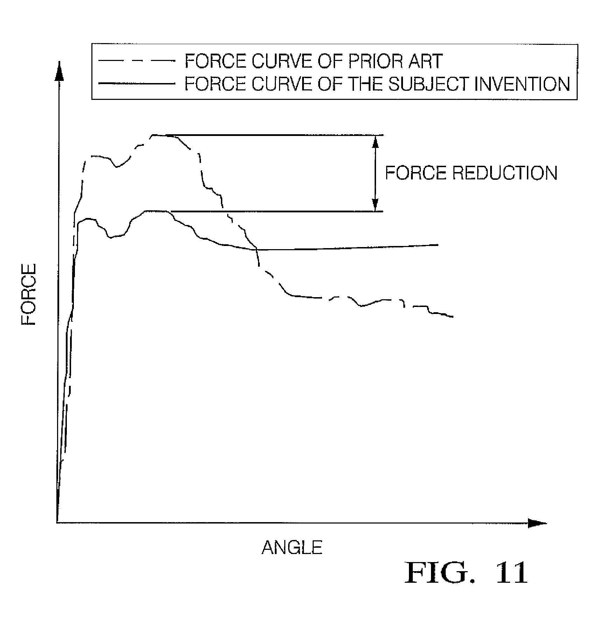

Referring to Figures 1 and 8, a mechanism is coupled to the cable 96 for delaying release of the second locking device 66 from the steering column 22 until the first locking device 42 moves to the predetermined mid-position. The delay in the release of the second locking device 66 reduces the overall force to rotate the lever 60 from the locking position 62 to the adjusting position 64. In other words, the mechanism allows for a more uniform lever load when delaying release of the second locking device 66 from the steering column 22 until the first locking device 42 moves to the predetermined mid-position. Figure 11 shows a graphical interpretation of the reduction in the force as compared to the prior art. The mechanism is disposed adjacent at least one of the first end 98 and the second end 100 of the cable 96. However it is to be appreciated that the mechanism may include some of the features of the first locking device 42 such that when the first locking device 42 moves from the first locked position 44 to the first unlocked position 46, the first end 98 of the cable 96 moves without pulling the second end 100 of the cable 96.

The mechanism may be further defined as an extension 108 connected to the second end 100 of the cable 96 and extending away from the second locking device 66 to define a length (L) and a distal end 110. The extension 108 and the cable 96 are supported by the arm 74 of the second locking device 66. The extension 108 moves through the arm 74 along the length (L) until the first locking device 42 moves to the predetermined mid-position and the distal end 110 engages the stop surface 80 (see Figure 9). The extension 108 moves relative to the second locking device 66 while the second locking device 66 remains in the second locked position for delaying release of the second locking device 66 from the steering column 22 until the first locking device 42 rotates to the predetermined mid-position. The delay in the release of the second locking device 66 reduces the overall force to rotate the lever 60 from the locking position 62 to the adjusting position 64. In other words, the mechanism allows for a more uniform lever load when delaying release of the second locking device 66 from the steering column 22 until the first locking device 42 moves to the predetermined mid-position. Again, Figure 11 shows a graphical interpretation of the reduction in the force as compared to the prior art. However it is to be appreciated that the mechanism can be any suitable configuration so long as there is a delay in release of the second locking device 66 until the first locking device 42 rotates to the predetermined mid-position. For example, the mechanism may be further defined as a cam 114 or a biasing device as discussed below.

Referring back to Figure 8, the extension 108 and the second end 100 of the cable 96 are integrally formed of a homogeneous material. However it is to be appreciated that when the lever 60 returns to the locking position 62, the second locking device 66 moves back to the second locking position 62 by the return spring of the body portion 72, and the cable 96 is strong enough to push back through the conduit 104 and move the extension 108 back to the length (L) from the second locking device 66.

The mechanism may be further defined as the biasing device disposed about the extension 108 along the length (L) between the stop surface 80 and the distal end 110 for continuously biasing the distal end 110 away from the stop surface 80. More specifically, the biasing device may be further defined as a coil spring 112 disposed about the extension 108 along the length (L) between the stop surface 80 and the distal end 110 for continuously biasing the distal end 110 away from the stop surface 80. In addition, the coil spring 112 continuously biases the distal end 110 away from the stop surface 80 to take up the length (L) to prevent the cable 96 from rattling within the conduit 104. When the second locking device 66 moves from second locked position to the second unlocked position 70, the distal end 110 of the extension 108 moves toward the arm 74 which compresses the coil spring 112 against the stop surface 80 of the arm 74. However it is to be appreciated that the coil spring 112 may be fully compressed or only partially compressed when the second locking device 66 disengages the teeth 88 of the first and second shoes 84, 86. The amount the coil spring 112 is compressed depends on the shape of the distal end 110 and/or the length (L) of the extension 108. For example, the distal end 110 could have a t-shaped configuration or define a cavity 58, in which the coil spring 112 will compress a pre-determined amount until the distal end 110 engages the stop surface 80. However it is to be appreciated that the biasing device is optional.

As shown in Figures 1-3, the mechanism may be further defined as the cam 114 having an arcuate profile defining a variable movement of the cable 96 as the first locking device 42 moves from the first locked position 44 to the predetermined mid-position. The cam 114 may be disposed adjacent the cavity 58 of the plate 54. The cam 114 defines a recess 116 adjacent the cavity 58 of the plate 54 for maintaining the cable 96 within the recess 116. The cam 114 and the plate 54 are integrally formed of a homogeneous material such that the cam 114 rotates about the pivot axis 48 during movement of the first locking device 42 between the positions 44, 46 of the first locking device 42. The arcuate profile of the cam 114 may be steep, shallow, or any acceptable profile to increase or decrease the variable movement of the cable 96 as the first locking device 42 moves from the first locked position 44 to the predetermined mid-position. However it is to be appreciated that when the first locking device 42 moves from the first locked position 44 to the predetermined mid-position, the cam 114 may slow the pulling of the cable 96.

Referring to Figures 1, 2, 4-10, to adjust the position of the steering column 22, the lever 60 is rotated from the locking position 62 to the adjusting position 64. As the lever 60 rotates, the first locking device 42 moves from the first locked position 44 to the predetermined mid-position. The wedge 52 of the first locking device 42 moves along the pivot axis 48 away from the inner jacket 32 to allow the telescoping movement 28 (as shown in Figure 5). The cam 114 and the plate 54 rotate about the pivot axis 48 which moves the first end 98 of the cable 96 without moving the second locking device 66 to the second unlocked position 70. The first end 98 of the cable 96 moves the second end 100 of the cable 96 which also moves the extension 108 and the distal end 110 to engage the stop surface 80 of the arm 74 (as shown in Figure 9). However it is to be appreciated that if the coil spring 112 is disposed between the distal end 110 and the stop surface 80 and the distal end 110 and/or the length of the extension 108 is design such that the coil spring 112 is to be fully compressed, then the fully compressed coil spring 112 would abut the stop surface 80 instead of the distal end 110. As the first locking device 42 continues pass the predetermined mid-position and to the first unlocked position 46, the distal end 110 moves the arm 74 and ultimately the body portion 72 of the second locking device 66. The body portion 72 of the second locking device 66 moves along the longitudinal axis 24 and along the tilt axis 37 while the raised portion 94 of the first shoe 84 moves along the angled surface 82 of the body portion 72 to disengaged the teeth 88 from the second shoe 86 for allowing the tilting movement 26 (as shown in Figure 10).

To prevent both the telescoping movement 28 and the tilting movement 26, the lever 60 is rotated about the pivot axis 48 from the adjusting position 64 to the locking position 62. The first locking device 42 moves from the first unlocked position 46 to the first locked position 44 and the wedge 52 of the first locking device 42 moves along the pivot axis 48 and engages the inner jacket 32 to prevent the telescoping movement 28 (as shown in Figure 4). The cam 114 and the plate 54 rotate about the pivot axis 48 which moves the first end 98 of the cable 96. As the first end 98 of the cable 96 moves, the extension 108 moves back through the arm 74 and the distal end 110 moves away from the stop surface 80 of the arm 74. If the coil spring 112 is disposed between the distal end 110 and the stop surface 80 and the coil spring 112 decompresses and continuously biases the distal end 110 away from the stop surface 80. The arm 74 and the body portion 72 move back along the longitudinal axis 24 and along the tilt axis 37 by the return spring of the second locking device 66. As the body portion 72 moves, the raised portion 94 of the first shoe 84 moves along the angled surface 82 of the body portion 72 to engaged the teeth 88 of the second shoe 86 for preventing the tilting movement 26.

Obviously, many modifications and variations of the present invention are possible in light of the above teachings. The foregoing invention has been described in accordance with the relevant legal standards; thus, the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A steering column assembly (20) for a vehicle, said assembly comprising;
a steering column (22) defining a longitudinal axis (24) for tilting movement (26) and telescoping movement (28);
a first locking device (42) coupled to said steering column (22) and movable between a first locked position (44) securing said steering column (22) for preventing said telescoping movement (28) and a first unlocked position (46) releasing from said steering column (22) for allowing said telescoping movement (28) with said first locking device (42) defining a predetermined mid-position between said first locked position (44) and said first unlocked position (46);
a second locking device (66) coupled to said steering column (22) and moveable between a second locked position securing said steering column (22) for preventing said tilting movement (26) and a second unlocked position (70) releasing from said steering column (22) for allowing said tilting movement (26);
a cable (96) extending between said first locking device (42) and said second locking device (66); and
a mechanism coupled to said cable (96) for delaying release of said second locking device (66) from said steering column (22) until said first locking device (42) moves to said predetermined mid-position.

2. An assembly as set forth in claim 1 wherein said cable (96) includes a first end (98) coupled to said first locking device (42) and a second end (100) coupled to said second locking device (66) with said mechanism disposed adjacent at least one of said first end (98) and said second end (100).

3. An assembly as set forth in claim 2 wherein said mechanism is further defined as an extension (108) connected to said second end (100) of said cable (96) and extending away from said second locking device (66) to define a length (L) and a distal end (110) with said extension (108) moving relative to said second locking device (66) while said second locking device (66) remains in said second locked position for delaying release of said second locking device (66) from said steering column (22) until said first locking device (42) rotates to said predetermined mid-position.

4. An assembly as set forth in claim 3 wherein said extension (108) and said second end (100) of said cable (96) are integrally formed of a homogeneous material.

5. An assembly as set forth in claim 3 wherein said second locking device (66) includes a body portion (72) having an arm (74) extending away from said body portion (72) for supporting said cable (96) and said extension (108).

6. An assembly as set forth in claim 5 wherein said arm (74) includes a stop surface (80) with said extension (108) moving through said arm (74) along said length (L) until said first locking device (42) moves to said predetermined mid-position and said distal end (110) engages said stop surface (80).

7. An assembly as set forth in claim 6 wherein said mechanism is further defined as a biasing device disposed about said extension (108) along said length (L) between said stop surface (80) and said distal end (110) for continuously biasing said distal end (110) away from said stop surface (80).

8. An assembly as set forth in claim 7 wherein said biasing device is further defined as a coil spring (112) disposed about said extension (108) along said length (L) between said stop surface (80) and said distal end (110) for continuously biasing said distal end (110) away from said stop surface (80).

9. An assembly as set forth in claim 7 wherein said mechanism is further includes a cam (114) having an arcuate profile defining a variable movement of said cable (96) as said first locking device (42) moves from said first locked position (44) to said predetermined mid-position.

10. An assembly as set forth in claim 2 wherein said mechanism is further defined as a cam (114) having an arcuate profile defining a variable movement of said cable (96) as said first locking device (42) moves from said first locked position (44) to said predetermined mid-position.

11. An assembly as set forth in claim 10 wherein said cam (114) defines a recess (116) for maintaining said cable (96) within said recess (116).

12. An assembly as set forth in claim 10 wherein said first locking device (42) defines a pivot axis (48) and includes a bolt (50) disposed along said pivot axis (48) for moving said first locking device (42) between said positions (44, 46) of said first locking device (42).

13. An assembly as set forth in claim 12 wherein said first locking device (42) includes a plate (54) coupled to said bolt (50).

14. An assembly as set forth in claim 13 wherein said cam (114) and said plate (54) are integrally formed of a homogeneous material such that said cam (114) rotates about said pivot axis (48) during movement of said first locking device (42) between said positions (44, 46) of the first locking device (42).

15. An assembly as set forth in claim 13 further including a lever (60) extending from said plate (54) with said lever (60) and said plate (54) rotatably movable about said pivot axis (48) between said positions (44, 46) of said first locking device (42).

16. An assembly as set forth in claim 13 further including a protrusion (102) disposed on said first end (98) of said cable (96) and said plate (54) defining a cavity (58) adjacent said cam (114) for receiving said protrusion (102) to secure said first end (98) of said cable (96) to said first locking device (42).

17. An assembly as set forth in claim 13 further including an actuator (118) coupled to said plate (54) with said plate (54) rotatably movable about said pivot axis (48) between said positions (44, 46) of said first locking device (42).

18. An assembly as set forth in claim 17 wherein said actuator (118) is further defined as a motor (120) and a gear box (122) with said gear box (122) disposed on said bolt (50) and coupled to said motor (120).

19. An assembly as set forth in claim 18 wherein said gear box (122) includes a worm (128) and a worm gear (130) adjacent one another with said worm gear (130) disposed on said bolt (50) and said plate (54) disposed on said worm gear (130) with each of said worm (128) and said worm gear (130) having a plurality of serrations (132) that cooperate with each other for rotating said plate (54) about said pivot axis (48) between said positions (44, 46) of said first locking device (42).

20. An assembly as set forth in claim 2 further including a conduit (104) disposed about said cable (96) for supporting said cable (96) and spaced from said first end (98) and said second end (100) with said cable (96) slidable in said conduit (104).
